# EUROPEAN PATENT APPLICATION

(11) **EP 1 978 525 A2**
(43) Date of publication of application: **08.10.2008**
(21) Application number: 08003497.8
(22) Date of filing: 26.02.2008
(51) Int. Cl.: G11B 33/04

(54) **Media case and circuit pattern sheet**

(30) Priority: 03.04.2007 JP 2007097223
(71) Applicant: Hitachi, Ltd., Chiyoda-ku Tokyo 100-8280 (JP)
(72) Inventor: Sakama, Isao c/o Hitachi Ltd. Intellectual Property Group, Chiyoda-ku, Tokyo 100-8220 (JP); Hoshino, Osamu c/o Hitachi, Ltd. Intellectual Property Group, Chiyoda-ku, Tokyo 100-8220 (JP)
(74) Representative: Strehl Schübel-Hopf & Partner

(57) **Abstract**

An object of the present invention is to provide a media case and a circuit pattern sheet with a simple configuration allowing highly dense collection and reliable recognition of housed disk media.

In order to attain the object, a media case 1 of the present invention can house disk media 50 provided with an RFID tag (not illustrated in the drawing). This media case 1 includes an antenna element 51a being formed on its back plane to exchange an electromagnetic wave signal with the outside of the media case 1; a waveguide line 52a formed in the vicinity of its center therethrough along the disk media 50 from the antenna element 51a to guide high-frequency signals representing the electromagnetic wave signals to the antenna element 51a; and a resonance element 53a being formed adjacent to this waveguide line 52a and electromagnetically induced by the high-frequency signal.

## Description

### INCORPORATION BY REFERENCE

The present application claims priority from Japanese application JP2007-097223 filed on April 3, 2007, the content of which is hereby incorporated by reference into this application.

### Background of the invention

The present invention relates to a media case, and a circuit pattern sheet, which can house disk media provided with an RFID (Radio Frequency Identification) tag allowing information recorded on an IC chip to be read in a noncontact manner outside it.

It is conceivable to apply a noncontact tag to disk media with its content being written in the tag in order to manage the disk media. Most portions of such disk media including its outer periphery are used for a data storage region having a data storage layer. However, no data storage layer is present in the vicinity of a hole in the center in order to clamp the disk media in use. From this point of view, a noncontact tag is preferably located in the vicinity of a hole in the center of the disk media. However, when the disk media is put in a case and the cases are collected in a rack, it is necessary to read the noncontact tag in the vicinity of the center of the disk media from its outer periphery. Therefore, there has been a problem that it is difficult to read a noncontact tag applied to disk media collected in a rack since the read distance is increased and signals are attenuated behind the disk media or the like.

Therefore, a housing case for an information storage medium is known (refer to JP-A-2005-339663 (paragraphs [0024] to [0032] or see Fig. 1). In this housing case, a noncontact tag or a coil-on-chip is applied to a storage media such as a cassette tape, a CD and a DVD, and this coil-on-chip is read with a substantially U-shaped read antenna provided on a partition plate of a housing shelf via a booster arranged in a substantially spiral shape. In this read system for a housing case, there is one read antenna for each storing location.

### Brief summary of the invention

However, in the case of collecting these housing cases on a housing shelf, the housing cases are separated by a partition plate provided with a read antenna. Therefore, it has been difficult to increase stack density of the housing cases for saving space. In addition, the read antenna has to previously be connected to the read writer apparatus, which gives rise to a problem that wiring becomes complicated and the configuration is made inflexible. Moreover, any of the booster coil and the on-chip coil on the chip is complicated in its structure and manufacturing process due to their spiral shape and requirements of double-sided through-hole treatment. Furthermore, the coils are read in the direction perpendicular to the coil. Therefore, in some location where the on-chip coil is provided, reading could not be allowed, which gives rise to a problem. In addition, the read antenna is provided to each housing case, which gives rise to a problem that the housing cases have to be spaced apart when the cases are housed on the housing shelf.

The present invention has been attained in view of the above described problems and an object thereof is to provide a media case and a circuit pattern sheet with a simple configuration allowing highly dense collection and reliable recognition of housed disk media.

In order to attain the above described problem, a media case of the present invention is a media case, which can house disk media provided with an RFID tag, including an upper plane and a bottom plane to be arranged substantially in parallel to this disk media and a circumferential plane being present between the upper plane and the bottom plane, comprising: an antenna element being formed across a predetermined length on the periphery plane or being formed across a predetermined length in contact with the circumferential plane on the upper plane or the bottom plane to exchange an electromagnetic signal with the outside; a waveguide line formed along the disk media from the antenna element, passing the vicinity of the center of the disk media, to guide high-frequency signals representing electromagnetic signals to the antenna element; and a resonance element being inserted in that waveguide line to guide the high-frequency signals or being formed adjacent to that waveguide line and electromagnetically induced by the high-frequency signal.

The present invention can provide a media case and a circuit pattern sheet in a simple configuration allowing highly dense collection and reliable recognition of disk media.

Other objects, features and advantages of the invention will become apparent from the following description of the embodiments of the invention taken in conjunction with the accompanying drawings.

### Brief description of the several views of the drawing

Fig. 1 is a perspective view illustrating a media case of a first embodiment according to the present invention;
Fig. 2 is an explanatory diagram illustrating a configuration example of a disk media managing system;
Fig. 3A is a perspective view illustrating a media case of a jewel case type and Fig. 3B is an explanatory diagram illustrating a lid of this media case in the half-open state;
Fig. 4A is a perspective view illustrating a media case of a maxi case type and Fig. 4B is an explanatory diagram illustrating a lid of this media case in the half-open state;
Fig. 5 is a perspective view illustrating a media case of a second embodiment according to the present invention;
Fig. 6 is a perspective plan view illustrating a media case of a third embodiment according to the present invention;
Fig. 7 is a perspective plan view illustrating a media case of a fourth embodiment according to the present invention;
Fig. 8 is a perspective plan view illustrating a media case of a fifth embodiment according to the present invention;
Fig. 9 is a perspective plan view illustrating a media case of a sixth embodiment according to the present invention;
Fig. 10 is a perspective plan view illustrating a media case of a seventh embodiment according to the present invention;
Fig. 11 is a perspective plan view illustrating a media case of an eighth embodiment according to the present invention;
Fig. 12 is a perspective plan view illustrating a media case of a ninth embodiment according to the present invention;
Fig. 13 is a perspective plan view illustrating a media case of a tenth embodiment according to the present invention;
Fig. 14A is a perspective view illustrating a media case of an eleventh embodiment according to the present invention and Fig. 14B is a sectional view illustrating this media case;
Figs. 15A and 15B are assembly diagrams illustrating a media case of an eleventh embodiment according to the present invention;
Fig. 16 is a perspective view illustrating a media case housing in which a great number of media cases are housed in a housing box;
Fig. 17A is a perspective view illustrating a media case of a twelfth embodiment according to the present invention; Fig. 17B is a sectional diagram illustrating a first configuration example of this media case; and Fig. 17C is a sectional diagram illustrating a second configuration example of this media case; and
Figs. 18A to 18C are assembly diagrams illustrating another production example for the media case of the twelfth embodiment according to the present invention.

### Detailed description of the invention

Next, with reference to the respective accompanying drawings, embodiments of the present invention will be described in detail.

### <First embodiment>

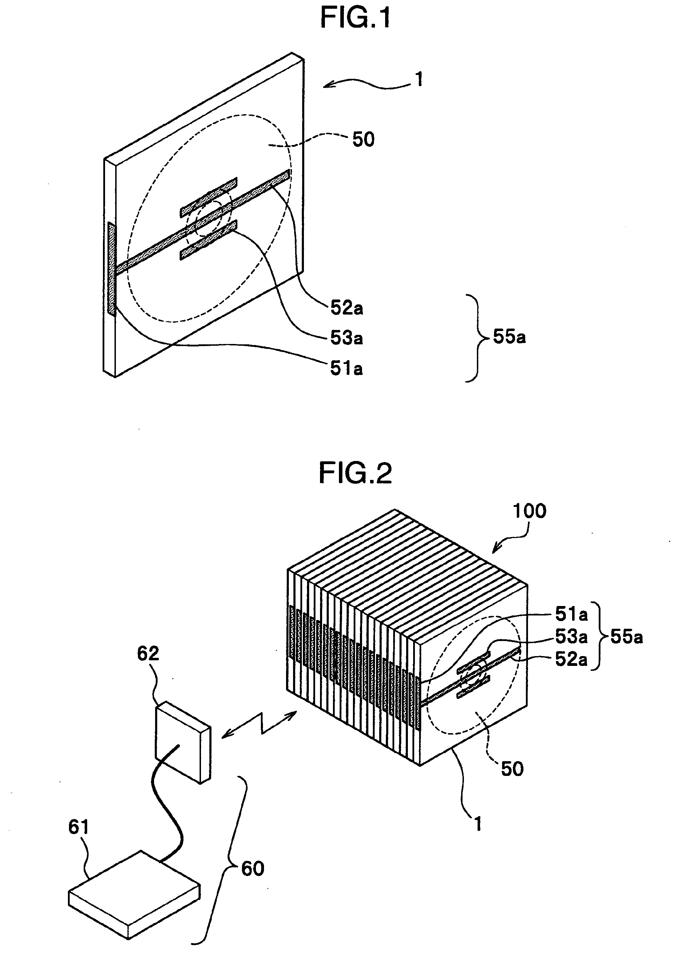

Fig. 1 is a perspective view illustrating a media case 1 of a first embodiment according to the present invention. Here, in the case where the base member of the media case 1 is transparent will be illustrated. This base member can be dyed or be opaque.

This media case 1 is a container which houses disk media 50 in the inner space and is freely opened and closed and made of dielectric such as rigid plastic including styrene resin, acrylic resin and polycarbonate and paper. In the media case 1, a circuit pattern 55a made of high-frequency good conductor film such as aluminum and copper is formed. That is, the circuit pattern 55a made of electrically conductive film is formed on the base member of the disk media 50 made of dielectric and thereby a stripline waveguide is configured. The circuit pattern 55a has thickness capable of providing sufficient low resistance for high frequency signals and formed by etching and sputtering, for example, or by attaching metal foil. In addition, the circuit pattern 55a can be formed on resin film made of such as PET and PP and attached to the media case 1.

The circuit pattern 55a consists of an antenna element 51a exchanging signals with the outside; a waveguide line 52a extending from in the vicinity of the center in the longitudinal direction of the antenna element 51a along the direction of the diameter of the disk media 50; and two resonance elements 53a formed on the both sides of waveguide line 52a adjacently in parallel in the vicinity of the center of the disk media 50. The antenna element 51a is formed on a plane to become a headline (back plane; a plane corresponding to the back cover of a book) when the media cases 1 are collected in a stacked manner in the direction of thickness (that is, stacked so that the bottom plane of the media case 1 contacts with the upper plane of another media case each of which will be described below).

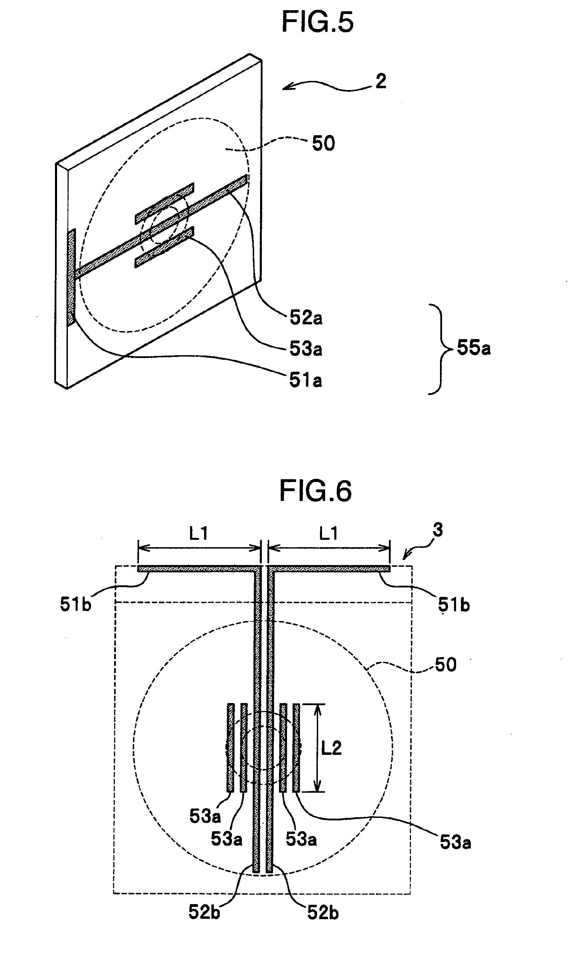

Here, in the present description, "waveguide line" refers to a portion arranged in an attempt to exchanging high-frequency signals (high-frequency currents) with exclusively for "antenna element" among "circuit patterns" under the low-loss condition. However, when an RFID tag (not illustrated in the drawing) attached to the disk media 50 is adjacent to the waveguide line as described below, the RFID tag is read through this waveguide line. Accordingly, the "waveguide line" is formed so that various characteristics as a line (such as characteristic impedance) become approximately constant across the transmission direction of high-frequency signals (high-frequency currents). Specifically, the waveguide line 52a is a single line and formed with a constant width and approximately straight and, therefore, various characteristics as a line (such as characteristic impedance) is "substantially uniform" (including "uniform") along the direction of transmission. In addition, a waveguide line 52b to be described later with reference to Fig. 6 and the like constitutes a balanced line pair consisting of two lines similar to the waveguide line 52a in a pair arranged in parallel (including substantially in parallel) to improve various characteristics as a line. When the resonance element (53a, for example) is arranged adjacently to these waveguide lines (52a and 52b) an RFID tag (to be described below) on the disk media 50 is brought adjacent thereto, uniformity of characteristics of lines partially and slightly change influenced thereby. But also this case will be handled as the waveguide lines (52a and 52b) in comprehensive determination of arrangement and shape on lines themselves.

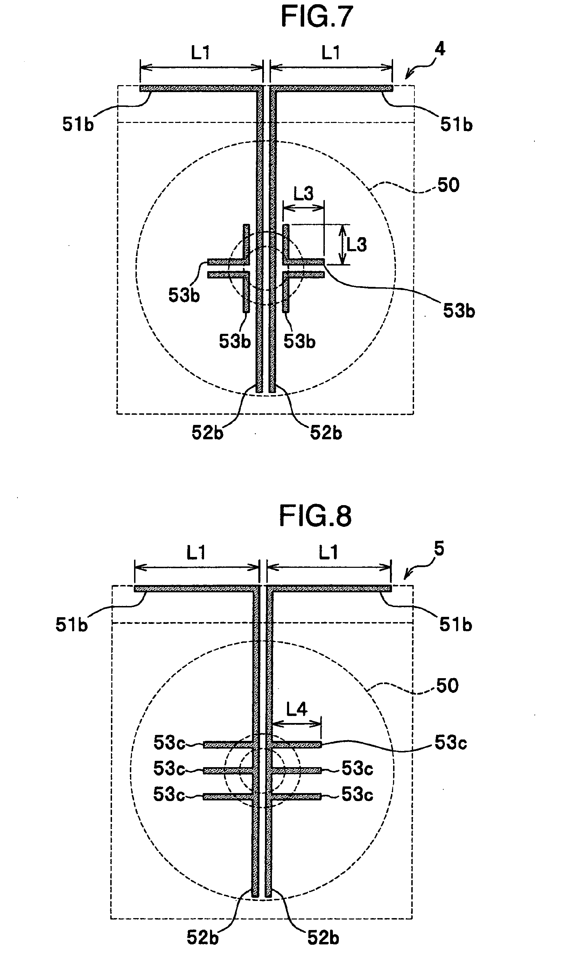

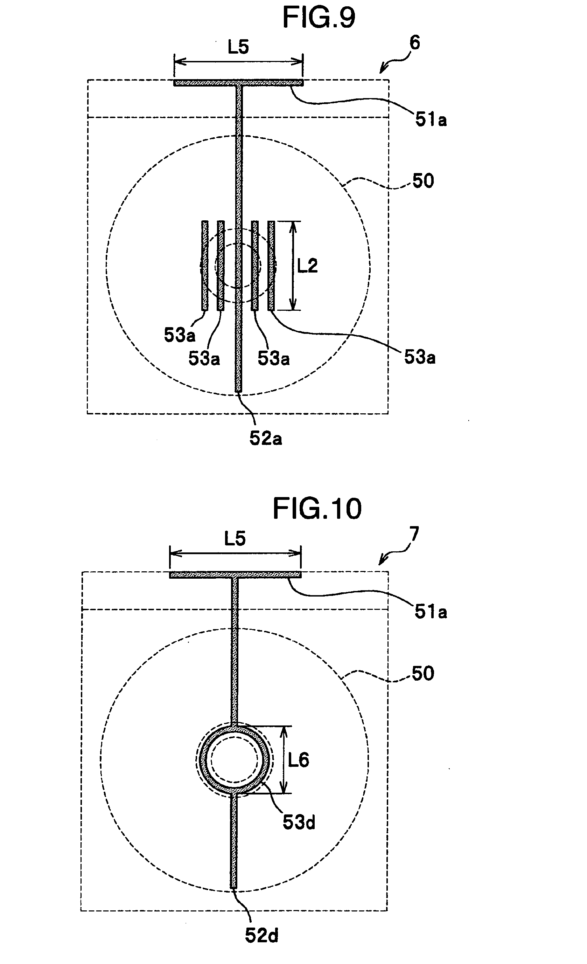

In addition, for the present description, the "resonance element" is a part of the "circuit pattern" and can be classified approximately into two kinds. Firstly, one is likewise the resonance element 52a which is an electrically conductive member of the waveguide line 52a and the other resonance element which is not electrically conductive each other but are electromagnetically induced by high-frequency signals (high-frequency currents) flowing in the waveguide line or the other resonance elements so that the high-frequency signals are guided. Secondly, the other one is likewise resonance element 53c to be described later with reference to Fig. 8 and resonance parts 53d, 53e, 53f and 53g to be described with reference to Fig. 10 to Fig. 13, which are inserted so as to be electrically conductive to the waveguide line to electrically guide high-frequency signals flowing in the waveguide line.

The electrically conductive material of the first resonance element is formed in a separate state and therefore the first resonance element can be distinguished easily.

The second resonance element includes a bent shape and a branched shape and therefore, property for high-frequency signals significantly varies across the bent shape or the branched shape. However, the waveguide line has uniform property (characteristic impedance and the like) as apparent from its shape. Accordingly, tracing the waveguide line to find the bent part and the branched part, the portion being the waveguide line and the portion being the resonance element can be distinguished. Of course, the boundary between the waveguide line and the resonance element can be obtained experimentally by irradiating the circuit pattern with electromagnetic waves to measure its operation with a measuring instrument (not illustrated in the drawing).

Back to Fig. 1, the disk media 50 is storage medium for data in a thin plate shape such as an optical disk or an optical magnetic disk and its shape is a disk shape typically having outer periphery and concentric hole in the center. As an example, the disk media 50 is a compact disk, DVD (Digital Versatile Disc) and the like and can be any of an unrewritable one, a recordable one and a rewritable one. The outer periphery part of the disk media 50 is provided with data storage layer (not illustrated in the drawing) made of aluminum thin film, pigment and the like. However, in the vicinity of the hole part of the disk media 50, the data storage layer is not present for clamping the disk media 50 and the like. Therefore, avoiding approaching the data storage layer, the RFID tag (not illustrated in the drawing) is attached to in the vicinity of the hole of the disk media 50.

This RFID tag (not illustrated in the drawing) is typically a tag antenna provided with an L-shaped slit in a dipole element made of metal film and in which a stub for impedance matching is formed. A chip for an RFID including a sending/receiving function, a power extracting function, an arithmetic control function, a nonvolatile storage function and the like such as a mu-chip(registered trade name) is connected to this location (stub side and the opposite side of the stab over a slit) as a feed point (any thereof is not illustrated). This configuration sets off the capacitance portion of the chip with the inductance portion of the stub to match the impedance between the chip side and the antenna side and, therefore, the loss of signal to be sent and received is suppressed. Therefore, sufficient communication performance can be obtained with a tag antenna of a shortened form with the actual length being shortened than the length for complete tuning to the signals to be exchanged. Thus, it become possible to shorten the entire length of the tag antenna (that is, the entire length of the RFID tag) and avoid the data storage layer and thereby form an RFID tag (not illustrated in the drawing) in the vicinity of the hole of the disk media 50. Otherwise, another element having function as described above such as the one with an antenna coil being formed on a chip can be used as the RFID tag (not illustrated in the drawing). This RFID tag is positioned in any of the regions for clamping and the like. According to the present embodiment, the RFID tag is covered by a readable region in spite that the disk media 50 is directed anywhere (that is, in spite of the state of being rotated in any direction around the hole as the center).

Fig. 2 is an explanatory diagram illustrating a configuration example of a disk media managing system 100;

This disk media managing system 100 is configured by a great number of media case 1 capable of housing the disk media 50 (see Fig. 1) and a read apparatus 60 capable of reading the RFID tag (not illustrated in the drawing) formed in the disk media 50. Whether the media case 1 has already housed or has not yet housed the disk media 50 will not make any difference.

As illustrated in the drawing, in the case where a great number of media cases 1 are collected, most electromagnetic waves transmitted from the antenna 62 of the read apparatus 60 will be attenuated before reaching the location in the vicinity of the center of the disk media 50 and, even if the electromagnetic waves reach the location in the vicinity of the center, the reply waves from the RFID tag (not illustrated in the drawing) will be attenuated due to the disk media 50 and the like. Therefore, substantially the RFID tag (not illustrated in the drawing) attached to the location in the vicinity of the center of the disk media 50 cannot be directly read by the read apparatus 60.

Therefore, according to the media case 1 of the present embodiment, a high-frequency current having been output from the body 61 of the read apparatus 60 is irradiated as an electromagnetic wave from the antenna 62 and received by the antenna element 51a to become a high-frequency current. This high-frequency current flows also in the waveguide line 52a. Moreover, by being induced by the high-frequency current flowing in the waveguide line 52a, the high-frequency current also flows in the resonance element 53a. The electromagnetic wave is directly exchanged mainly between the read apparatus 60 and the antenna element 51a. However, the entire circuit pattern 55a resonates by that high-frequency current. Accordingly, if the RFID tag (not illustrated in the drawing) is present in the vicinity of any portion of the circuit pattern 55a, this RFID tag can be read from the outside read apparatus 60. In particular, the waveguide line 52a goes in the vicinity of the center of the disk media 50. Otherwise, two resonance elements 53a are formed so as to cover in the vicinity of this center and, therefore, through the antenna element 51a, the RFID tag attached to the disk media 50 can be read with highly accurate cognizance.

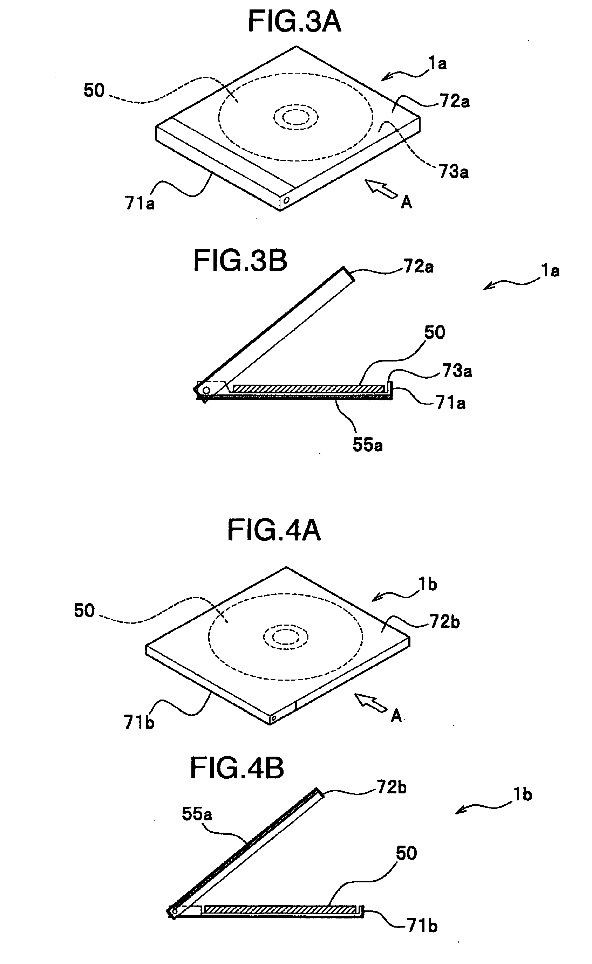

Fig. 3A is a perspective view illustrating a media case 1a of a jewel case type.

This media case 1a is a form of a P case (the general title of a case made of plastic) and is called as jewel case and is used, for example, for housing the thing with long recorded period (such as an album) for distribution and for storage of music copyright products and otherwise used in general without specifying any particular purpose. The media case 1a is three-piece structure consisting of a bottom (plate part) 71a, a tray (disk retaining part) 73a being fit into inside the bottom 71a and functioning to retain the disk media 50 and a lid (lid part) 72a corresponding to the lid of the bottom 71a and opening and closing like a hinge. A rear card (a back inlay or a back cover which is not illustrated in the drawing) being a card with a flap provided with a printed portion describing the contents of the disk media 50 is normally inserted between the bottom 71a and the tray 73a.

Fig. 3B is an explanatory diagram illustrating the lid 72a of this media case 1a in the half-open state. This drawing illustrates the media case 1a in the direction of the arrow A illustrated in Fig. 3A.

As illustrated in this drawing, in this media case 1a, the circuit pattern 55a is formed normally in the position where a rear card (not illustrated in the drawing) is sandwiched by the bottom 71a and the tray 73a. In this case, if the circuit pattern 55a is formed on the rear side (or the side in contact with the rear card of the tray 73a) of the rear card (not illustrated in the drawing), the circuit pattern 55a is not remarkable so as to prevent designs, letters and the like printed on the rear card from being hidden. The circuit pattern 55a can be formed either on the rear face or on the front face of the rear card. In addition, the circuit pattern 55a can be formed on the outer surface of the bottom 71a or the lid 72a, the inner surface of the lid 72a and, otherwise, the front card (so-called a jacket (not illustrated in the drawing) to be inserted into the lid 72a.

Fig. 4A is a perspective view illustrating a media case 1b of a maxi case type.

This media case 1b is a form of a P case and is called as a maxi case, which is thin and inexpensive, and is used, for example, for housing the thing with short recorded period (such as a maxi single, that is, 12 cm single) for distribution and for storage of music copyright products and otherwise used without specifying any particular purpose. The media case 1b is two-piece structure consisting of a bottom 71b, and a lid 72b corresponding to the lid of the bottom 71b and opening and closing like a hinge.

Fig. 4B is an explanatory diagram illustrating the lid 72b of this media case 1b in the half-open state. This drawing illustrates the media case 1b in the direction of the arrow A illustrated in Fig. 4A.

As illustrated in this drawing, in this media case 1b, a card is not inserted on the side of the bottom 71a and, therefore, the circuit pattern 55a is formed normally in the position of the lid 72b where a front card (not illustrated in the drawing) is sandwiched. In this case, across the lid 72b, the circuit pattern 55a can be formed. In addition, if the circuit pattern 55a is formed on the rear side of the front card (not illustrated in the drawing), the circuit pattern 55a is not remarkable from the outer side so as to prevent designs, letters and the like printed on the front card from being hidden. As described above, the circuit pattern 55a can be formed on any face in the rear or in the front of the front card.

In the present description, as exemplified in Fig. 3A and Fig. 4A, the face on the sides of the bottoms 71a and 71b of the media case 1a and 1b are bottom faces and the sides of the lid 72a and 72b are the upper faces. And as described above, the face on the side where the hinge mechanism causing the bottoms 71a and 71b and the lids 72a and 72b to open and close are present will be the back plane (headline plane). However, the face being opposite from this face can be configured as the back plane. The faces such as the back plane being present between the upper plane and the bottom plane are called as a circumferential plane.

Here, for each embodiment of the present embodiment, in the case where the disk media 50 is a CD or a DVD with diameter of 12 cm, the width of the formed pattern is 2 mm, for example, and the minimum distance between the patterns is 4 mm, for example, those dimensions can be changed by taking the kind of the housed media (that is, the size of the case) and the condition for reading the RFID tag (not illustrated in the drawing) into consideration.

In addition, the antenna element 51a is installed on the face to become the headline of the media case 1 in the present embodiment, which, however, will not set any limit. The antenna element 51a can be installed on the circumferential plane besides the plane to become the headline so that closing the media case 1 capable of being opened and closed is closed to bring antenna element 51a and the waveguide line 52a into connection.

Hereafter, the other embodiments will be described. Besides items to be described in particular, the configuration will also work likewise the first embodiment. Therefore, repetition of description will be omitted.

### <Second embodiment>

Fig. 5 is a perspective view illustrating a media case 2 of a second embodiment according to the present invention.

This media case 2 includes the antenna element 51a being formed in the position adjacent to the back plane in the flat plate portion to become the lid part or the plate part instead of forming the back face of the media case 1 (see Fig. 1). The other configurations can be likewise the media case 1 (see Fig. 1) of the first embodiment.

According to the second embodiment of the media case 2, the antenna element 51a is adjacent to the back plane and, therefore, the effect approximately likewise the effect of the media case 1 of the first embodiment is obtained. In addition, the antenna element 51a, the waveguide line 52a and the resonance element 53a can be formed on the same flat plane and, therefore, can be formed more easily. Moreover, no designs, letters and the like printed on the back plane label (the bent part corresponds to the back plane of the rear card) of the media case 2 will be hidden.

### <Third embodiment>

Fig. 6 is a perspective plan view illustrating a media case 3 of a third embodiment according to the present invention.

In this media case 3, two antenna elements 51b configuring a dipole antenna being on its back plane or formed on its back plane with its ends being arranged in a small distance; two waveguide lines 52b extending in parallel along the direction of diameter of the disk media 50 from the two adjacent parts of the antenna element 51b to become a feed part of this dipole antenna and the four (two pairs of) resonance elements 53b formed in the vicinity of the center of the disk media 50 in parallel in a determined distance to those two waveguide lines 52b are formed.

The length L1 of the antenna element 51b is, for example, L1 = (1/2)λ, where the wavelength λ of electromagnetic waves of frequencies to be exchanged. In addition, the length L2 of the resonance element 53a is, for example, L2 = (1/2)λ. The length of the waveguide line 52b is at least such length reaching the location in the vicinity of the center of the disk media 50 and, more preferably, length through the location in the vicinity of the center and can be determined in consideration of the property of the antenna element 51b and the resonance element 53a. Here, in the present description, electrical length of the pattern such as the antenna element 51a and the resonance element 53a is represented by the wavelength λ of the electromagnetic waves to be exchanged. Physical length of these patterns is determined in consideration of the wavelength shortening ratio determined by material, for example, of the base members for forming the patterns.

According to the media case 3 of the third embodiment, the two antenna elements 51b operate as a single wavelength dipole antenna so that the two waveguide lines 52b operate as a coplanar waveguide line, enabling, therefore, reduction in attenuation of electromagnetic signals and extension of communication distance. In addition, since the four (two pairs of) resonance elements 53a are formed, the range allowing read of the RFID tag (not illustrated in the drawing) can be expanded.

### <Fourth embodiment>

Fig. 7 is a perspective plan view illustrating a media case 4 of a fourth embodiment according to the present invention.

This media case 4 is configured likewise the media case 3 (see Fig. 6) of the third embodiment besides four L-shaped resonance elements 53b being symmetrically formed in the vicinity of the center of the disk media 50 instead of the resonance element 53a (see Fig. 6). More in detail, one side of the resonance element 53b is arranged in parallel to and in the vicinity of the other side of the resonance element 53b formed in the direction where the waveguide line 52b extends. The other side of this resonance element 53b is in parallel to one side of another resonance element 53b with two waveguide lines 52b being present inbetween. The length L3 of one side of the resonance element 53b is, for example, L3 = (1/4)λ.

According to the media case 4 of the fourth embodiment, since the resonance element 53b being bent to shape an letter L is formed, the range allowing read of the RFID tag (not illustrated in the drawing) can be expanded and stable read can be carried out regardless of the direction of the antenna (not illustrated in the drawing) of the RFID tag.

### <Fifth embodiment>

Fig. 8 is a perspective plan view illustrating a media case 5 of a fifth embodiment according to the present invention.

This media case 5 is configured likewise the media case 3 (see Fig. 6) of the third embodiment except that six (three pairs of) resonance elements 53c are formed in perpendicular to the waveguide line 52b (in parallel to the antenna element 51b) in a predetermined distance so as to cover a location in the vicinity of the center of the disk media 50 and so as to connect one end for three thereof to the waveguide line 52b. The length L4 of the resonance element 53c is, for example, L4 = (1/4)λ.

According to the media case 5 of the fifth embodiment, since a plurality of resonance elements 53c are formed in perpendicular to the waveguide line 52b, the range allowing read of the RFID tag (not illustrated in the drawing) can be expanded and stable read can be carried out regardless of the direction of the antenna (not illustrated in the drawing) of the RFID tag.

### <Sixth embodiment>

Fig. 9 is a perspective plan view illustrating a media case 6 of a sixth embodiment according to the present invention.

This media case 6 is configured by adding two more (a pair of) resonance elements 53a with the same length to the two (a pair of) resonance elements 53a in the media case 2 of the second embodiment (see Fig. 5) to form four in total (two pairs of) of resonance elements 53a being arranged mutually in parallel. The length L2 of any resonance element 53a is, for example, L2 = (1/2)λ. In addition, the length L5 of the antenna element 51a is, for example, L5 = (1/2)λ.

According to the media case 6 of the sixth embodiment, since the four (two pairs of) resonance elements 53a are formed, the range allowing read of the RFID tag (not illustrated in the drawing) can be expanded.

### <Seventh embodiment>

Fig. 10 is a perspective plan view illustrating a media case 7 of a seventh embodiment according to the present invention.

This media case 7 is configured by removing two (a pair of) resonance elements 53a in the media case 2 (see Fig. 5) of the second embodiment to form a substantially circular resonance part 53d going around the disk media 50 in the vicinity of its center midway the waveguide line 52d wired in the vicinity of the center of the disk media 50. The diameter L6 of the resonance part 53d is made slightly larger than the center hole of the disk media 50, for example, and is set to the size to cover the RFID tag (not illustrated in the drawing) as much as possible.

According to the media case 7 of the seventh embodiment, since substantially circular resonance part 53d is included, this RFID tag can be read with highly accurate cognizance likewise the above described respective embodiments even if the RFID tag attached to the disk media 50 in the vicinity of its center hole is rotated to any position.

### <Eighth embodiment>

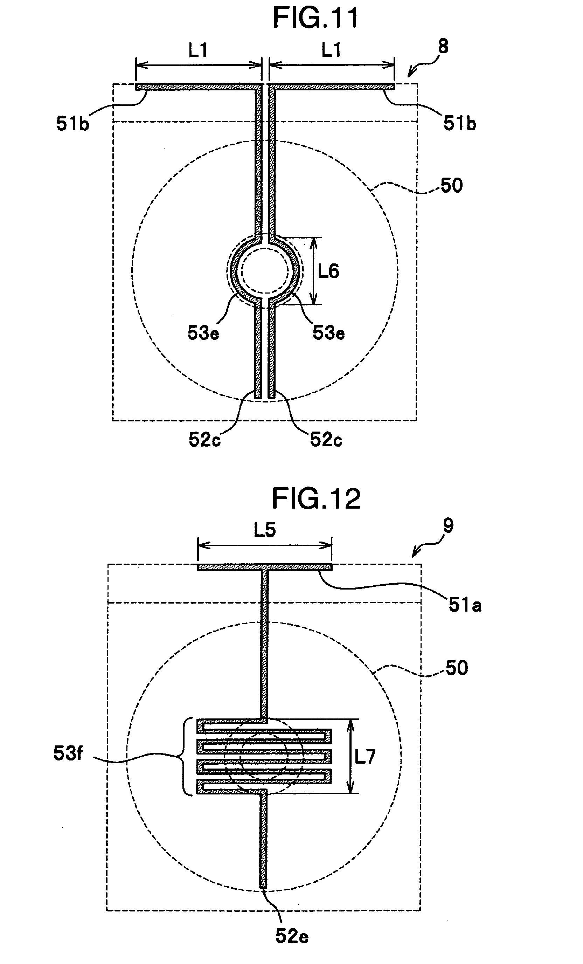

Fig. 11 is a perspective plan view illustrating a media case 8 of an eighth embodiment according to the present invention.

In this media case 8, a dipole antenna consisting of two antenna elements 51b instead of the antenna element 51a, two waveguide lines 52c being connected thereto and extending in the direction of diameter of the disk media 50 and two resonance parts 53e going around the disk media 50 in the vicinity of its center hole midway these two waveguide lines 52c in a cooperative manner with the two (a pair of) parties and forming a substantially circular shape are formed in the media case 7 of the seventh embodiment (see Fig. 10). The diameter L6 of the resonance part 53e can be determined as in the case of the seventh embodiment.

According to the media case 8 of the eighth embodiment, since substantially circular resonance part 53e is included, the RFID tag attached to the disk media 50 in the vicinity of its center hole can be read with highly accurate cognizance. Moreover, since a dipole antenna is formed with two antenna elements 51b and a coplanar waveguide line is formed with two waveguide lines 52c, loss of signals to be exchanged is made little so that communication performance can be improved.

### <Ninth embodiment>

Fig. 12 is a perspective plan view illustrating a media case 9 of a ninth embodiment according to the present invention.

This media case 9 is a variation of the media case 7 of the seventh embodiment (see Fig. 10) and is configured by inserting a resonance part 53f instead of the resonance part 53d (see Fig. 10) formed in midway of the waveguide line 52e corresponding to the waveguide line 52d (see Fig. 10). The resonance element 53f is made of a series of line and is formed to shape a switchback so as to cover the disk media 50 in the vicinity of the center hole. The dimension L7 along the waveguide line 52e of this resonance part 53f is approximately the length to cover the location in the vicinity of the center hole of the disk media 50.

According to the media case 9 of the ninth embodiment, since switchback-like resonance part 53f is included, this RFID tag can be read with highly accurate cognizance even if the RFID tag attached to the disk media 50 in the vicinity of its center hole is rotated to and housed in any position.

### <Tenth embodiment>

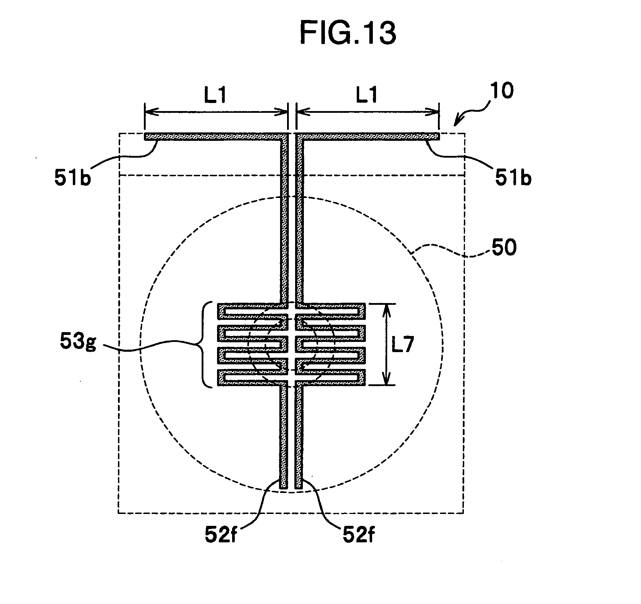

Fig. 13 is a perspective plan view illustrating a media case 10 of a tenth embodiment according to the present invention.

This media case 10 is a variation of the media case 8 of the eighth embodiment (see Fig. 11) and is configured by respectively inserting resonance parts 53g instead of the resonance part 53e (see Fig. 11) formed in midway of the waveguide line 52f corresponding to the waveguide line 52c (see Fig. 11). One resonance element 53g is made of a series of line and is formed to shape a switchback so as to cover the disk media 50 in the vicinity of the center hole with two resonance parts 53g. The dimension L7 along the waveguide line 52f of this resonance part 53g can be determined as in the ninth embodiment.

According to the media case 10 of the tenth embodiment, since two switchback-like resonance parts 53g are included, the RFID tag attached to the disk media 50 in the vicinity of its center hole can be read with highly accurate cognizance. Moreover, since a dipole antenna is formed with two antenna elements 51b and a coplanar waveguide line is formed with two waveguide lines 52f, loss of signals to be exchanged is made little so that communication performance can be improved.

### <Eleventh embodiment>

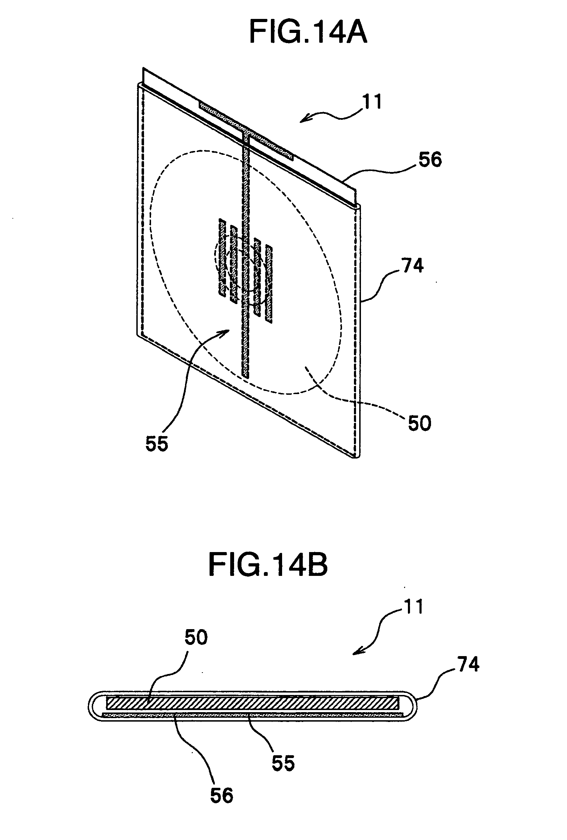

Fig. 14A is a perspective view illustrating a media case 11 of an eleventh embodiment according to the present invention.

This media case 11 consists of a storage bag 74 (in general, called as a CD sleeve and the like and typically a deflective product) forming a bag state obtained by combining an extremely thin transparent sheet made of plastic and unwoven fabric such as acryl fabric for damaging no content, and a circuit pattern sheet 56 including a circuit pattern 55 formed on a sheet made of PET and PP. Any circuit pattern 55 described in the above described second embodiment to tenth embodiment is applicable but the other patterns are also applicable.

Fig. 14B is a sectional view illustrating this media case 11.

This media case 11 is configured to stack the circuit pattern sheet 56 together with the disk media 50 being the original storage subject in the storage slot of the storage bag 74. The circuit pattern sheet 56 can just be put in the storage bag 74 together with the disk media 50 or can be fixed to the storage bag 74 with adhesive material.

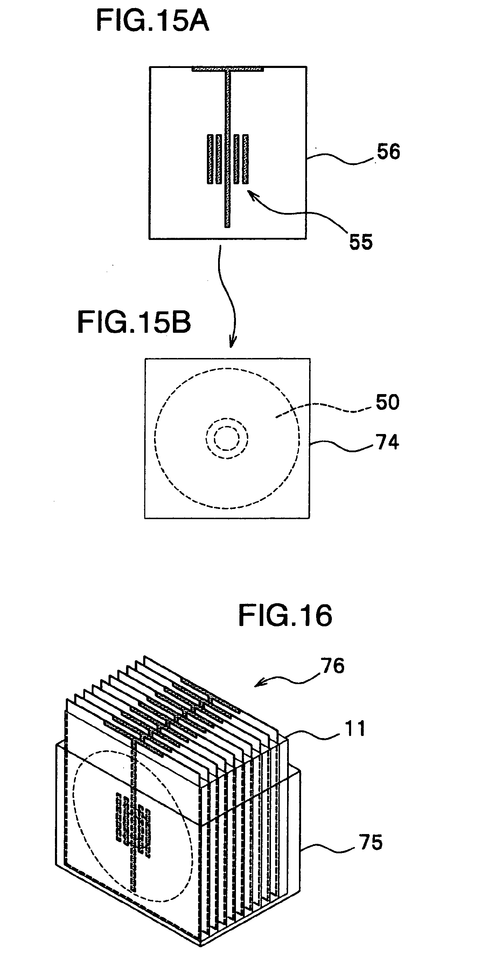

Figs. 15A and 15B are assembly diagrams illustrating this media case 11 (see Fig. 14).

As illustrated in Fig. 15B, the disk media 50 is put in the storage bag 74 in advance. The circuit pattern sheet 56 illustrated in Fig. 15A is inserted there to manufacture the media case 1 including the disk media 50. Otherwise, inserting the circuit pattern sheet 56 in the vacant storage bag 74 after manufacturing the media case 11, the disk media 50 can be inserted.

Here, the dimension in the direction perpendicular to the direction of insertion of the circuit pattern sheet 56 is slightly smaller than the inner dimension of the orifice of the storage bag 74 so that smooth insertion of the circuit pattern sheet 56 is feasible and the circuit pattern sheet 56 does not move significantly after insertion but can read the RFID tag (not illustrated in the drawing) with highly accurate cognizance. In addition, the dimension in the direction of inserting the circuit pattern sheet 56 is preferably slightly larger than the inner dimension of the depth of the storage bag 74. According to this configuration, the antenna element portion of the circuit pattern sheet 56 slightly protrudes from the storage bag 74, the signals can be exchanged better with the outside.

Fig. 16 is a perspective view illustrating a media case housing 76 in which a great number of media cases 11 are housed in a housing box 75.

Thickness of the media case 11 of the present embodiment is obtained by adding thickness of the circuit pattern sheet 56 to the normal storage bag 74. However, the circuit pattern sheet 56 itself is extremely thinner than the disk media 50 to an ignorable extent and, therefore, can be treated likewise the normal storage bag 74 so that approximately the same number of sheet can be housed in the housing box 75 with the same dimension.

### <Twelfth embodiment>

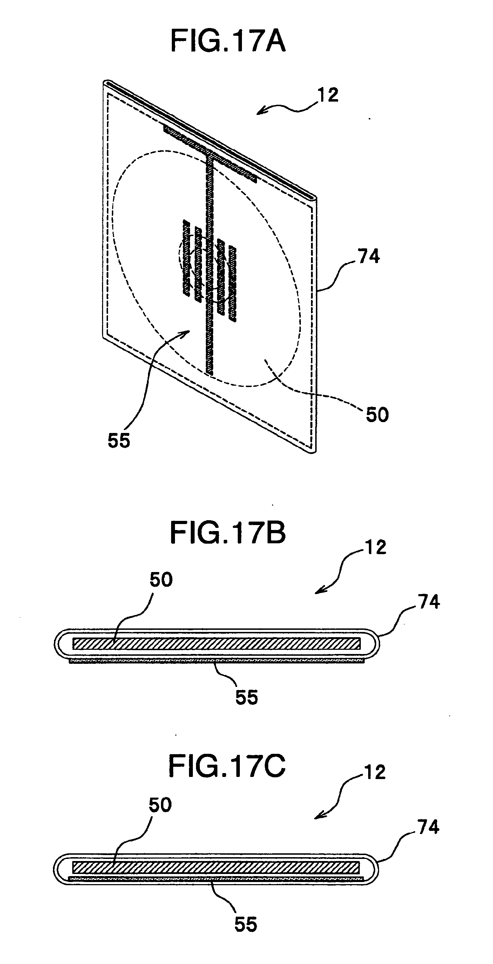

Fig. 17A is a perspective view illustrating a media case 12 of a twelfth embodiment according to the present invention.

This media case 12 includes a circuit pattern 55 being formed directly in the storage bag 74. The circuit pattern 55 can be formed in any method such as sputtering and pasting metal foil.

Fig. 17B is a sectional diagram illustrating a first configuration example of the media case 12.

This media case 12 includes the circuit pattern 55 formed on the exterior of the storage bag 74.

Fig. 17C is a sectional diagram illustrating a second configuration example of the media case 12.

This media case 12 includes the circuit pattern 55 formed on the interior of the storage bag 74.

Thus, the circuit pattern 55 can be formed in any of the exterior or the interior of the storage bag 74.

For this media case 12, the thickness of the electrically conductive film of the circuit pattern 55 is practically ignorable. Therefore, this media case 12 in the same number of the normal storage bag 74 can be stored in the hosing 75.

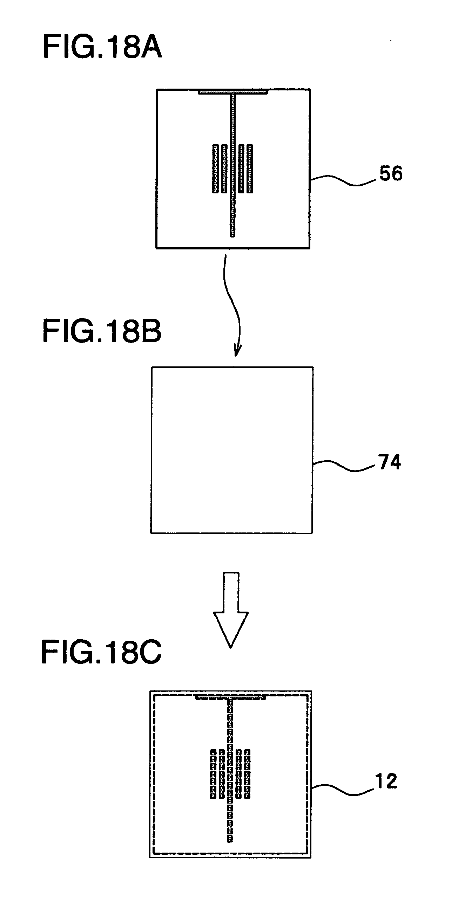

Figs. 18A to Fig. 18C are assembly diagrams illustrating another production example for the media case 12 of the twelfth embodiment according to the present invention.

At first, the circuit pattern sheet 56 illustrated in Fig. 18A is prepared and adhered to the storage bag 74 illustrated in Fig. 18B to manufacture the media case 12 illustrated in Fig. 18C.

Technology of the media case of the present invention is preferably applicable to a case for hosing the other items such as magnetic storage media including magnetic tape in addition to optical disks and magneto-optical disks.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A media case, which can house disk media provided with an RFID tag, including an upper plane and a bottom plane to be arranged substantially in parallel to the relevant disk media and a circumferential plane being present between the upper plane and the bottom plane, comprising:
an antenna element being formed across a predetermined length on the periphery plane or being formed across a predetermined length in contact with the circumferential plane on the upper plane or the bottom plane to exchange an electromagnetic signal with outside;
a waveguide line formed along the disk media from the antenna element, passing the vicinity of the center of the disk media, to guide high-frequency signals representing the electromagnetic wave signals to the antenna element; and
a resonance element being inserted in the waveguide line to guide the high-frequency signals or being formed adjacent to the waveguide line and electromagnetically induced by the high-frequency signal.

2. A media case, which can house disk media provided with an RFID tag, including an upper plane and a bottom plane to be arranged substantially in parallel to the relevant disk media, comprising:
an antenna element being formed across a predetermined length on the periphery of the upper plane or the bottom plane to exchange an electromagnetic wave signal with the outside;
a waveguide line formed along the disk media from the antenna element, passing the vicinity of the center of the disk media, to guide high-frequency signals representing the electromagnetic wave signals to the antenna element; and
a resonance element being inserted in the waveguide line to guide the high-frequency signals or being formed adjacent to the waveguide line and electromagnetically induced by the high-frequency signal.

3. The media case according to claim 1, wherein the circumferential plane is a square case consisting of four flat planes.

4. The media case according to claim 1, wherein the RFID tag is applied to the disk media in the vicinity of its center and the RFID tag is positioned in the vicinity of the waveguide line or the resonance element when the disk media is housed.

5. The media case according to claim 1, wherein the waveguide line is connected to the antenna element in the vicinity of its center.

6. The media case according to claim 1, wherein:
the antenna element consists of a first element and a second element with ends thereof being adjacently arranged;
the waveguide line consists of a first line and a second line being arranged mutually in parallel; and
the end of the first line is connected to the end of the first element and the end of the second line is connected to the end of the second line.

7. The media case according to claim 1, wherein
the resonance element has length of a half of wavelength of the electromagnetic wave signal.

8. The media case according to claim 1, comprising a plurality of the resonance elements.

9. The media case according to claim 1, including the resonance element extending in parallel to the waveguide line.

10. The media case according to claim 1, including the resonance element extending in the direction crossing the waveguide line.

11. The media case according to claim 1, wherein
at least one of the antenna element, the waveguide line and the resonance element is formed on a dielectric film and attached to the relevant media case.

12. The media case according to claim 1, wherein
a base member of the relevant media case is made of rigid plastic.

13. The media case according to claim 2, wherein
a base member of the relevant media case is a flexible sleeve.

14. The media case according to claim 1, being a three-piece type comprising a tray retaining the disk media, a bottom housing the tray and a lid capable of opening and closing the bottom, wherein
at least one of the antenna element, the waveguide line and the resonance element is formed in a rear card to be inserted between the tray and the bottom.

15. A circuit pattern sheet, which is applied to a case capable of housing disk media provided with an RFID tag and transmits a signal between the RFID tag and the outside, comprising:
a film-like dielectric sheet;
an antenna element being formed across a predetermined length along an outer border of the dielectric sheet to exchange an electromagnetic wave signal with the outside;
a waveguide line formed on the dielectric sheet along the disk media from the antenna element, passing the vicinity of the center of the disk media, to guide high-frequency signals representing the electromagnetic wave signals to the antenna element; and
a resonance element being formed on the dielectric sheet and inserted in the waveguide line to guide the high-frequency signals or being formed adjacent to the waveguide line and electromagnetically induced by the high-frequency signal.

16. The circuit pattern sheet according to claim 15, being capable of being pasted to the case or capable of being housed in the case together with the disk media.
